# EUROPEAN PATENT SPECIFICATION

(11) **EP 3 009 408 B1**
(45) Date of publication and mention of the grant of the patent: **05.10.2016**
(21) Application number: 14382399.5
(22) Date of filing: 17.10.2014
(51) Int. Cl.: C02F 3/00, B01F 15/00, C02F 3/20, C02F 3/28

(54) **PULSE WASTEWATER INJECTION AND MIXING DEVICE AND WASTEWATER INJECTION METHOD FOR ANAEROBIC REACTORS**
IMPULS-ABWASSERINJEKTIONS- UND -MISCHVORRICHTUNG UND ABWASSERINJEKTIONSVERFAHREN FÜR ANAEROBE REAKTOREN
DISPOSITIF D'INJECTION ET DE MÉLANGE DES EAUX USÉES À IMPULSIONS ET PROCÉDÉ D'INJECTION DES EAUX USÉES POUR LES RÉACTEURS D'ANAÉROBIE

(43) Date of publication of application: 20.04.2016
(73) Proprietor: FCC Aqualia, S.A., 28050 Madrid (ES)
(72) Inventor: Lara Corona, Enrique, 28050 Madrid (ES); Santiago Costa, Jose Ramón, 28050 Madrid (ES); Fernández Boizán, Maikel, 28050 Madrid (ES)
(74) Representative: Ungria López, Javier

(56) References cited:
- EP-A1- 1 806 324
- DE-A1-102006 032 489
- US-A1- 2003 085 171
- US-A1- 2009 308 806
- US-B2- 6 592 751

## Description

### FIELD OF THE INVENTION

This invention relates to upflow anaerobic sludge bed (UASB) reactors, more specifically to influent wastewater injection devices suitable therefor, and more particularly to influent distribution devices for psychrophilic treatment of municipal sewage in UASB reactors.

### BACKGROUND OF THE INVENTION

The implementation of direct anaerobic treatment of raw (unsettled) municipal wastewater in countries with sub-mesophilic (<20°C) temperatures is an ongoing challenge for researchers in the field of environmental engineering and technology. Such a successful use of psychrophilic anaerobic reactor would be of great economic importance because, in general (depending on the temperature of the wastewater), a significant amount of energy is required to bring the wastewater temperature up to the optimal mesophilic range (30-40°C). This puts a heavy burden on the economy of the wastewater system.

The present patent will focus on:
1. High rate anaerobic reactors (UASB and EGSB), and specifically on
2. Influent distribution systems, a crucial part of this type of anaerobic reactors.

### 1. HIGH RATE ANAEROBIC REACTORS

One of the major successes in the development of anaerobic wastewater technology was the introduction of high-rate reactors in which biomass retention and liquid retention are uncoupled, as the well-known Upflow Anaerobic Sludge Bed (UASB) reactors and Expanded Granular Sludge Bed (EGSB) reactors.

1.1 UASB (Upflow anaerobic sludge blanket -or bed-) reactor was developed by Lettinga and his colleagues in Netherlands (Wageningen University) in late 1970s. There are several types of full scale-reactors operated all over the world, as for example the one described in U.S. Pat. No 4253956.

The UASB bioreactor design has long been considered as the most appropriate anaerobic system to treat municipal wastewater because of the simplicity, low investment and operation costs thereof and previous positive experience in the treatment of a wide range of wastewater types. In tropical regions, the UASB bioreactor configuration is reported to be the most commonly used process for anaerobic municipal wastewater treatment Hundreds of UASB systems for the treatment of sewage have been commissioned in several tropical countries such as India, Colombia, Brazil, and Mexico. The ambient temperature in these countries is relatively high throughout the year (20-35°C), permitting Anaerobic Digestion (AD) of sewage to proceed in the mesophilic temperature range without process heating.

However, experience with one-stage UASB systems for raw sewage under sub-mesophilic temperatures has provided limited success at full-scale uses, mainly due to two low internal mixing intensities:

### a) Water mixing:

Liquid upflow velocity in UASB reactors should be limited to 1 m/h to avoid colloidal, total suspended solids (TSS) and volatile suspended solids (VSS) to be washed out. Upflow velocities higher than 1 m/h would decrease filtering capacity of the sludge bed and consequently total volatile suspended solids removal efficiencies, as well as deteriorate effluent quality and lower biogas production. Water upflow velocity limitation of 1 m/h is the main disadvantage of UASB reactor, as this velocity is much lower than 6-12 m/h which is the velocity required to accomplish an expanded bed with optimal contact between sludge (biomass) and influent wastewater (substrate). Substrate-biomass contact is important for the following reasons:
   - to prevent channeling of the wastewater through the sludge bed, and
   - to avoid the formation of dead zones in the reactor.

Besides, at process conditions considered in the present patent, there is often a low influent flow rate (<0.25 m/h), thus decreasing even more the water mixing capacity.

Possible solutions to this problem are internal circulation or mechanical stirring, as in utility models CN202246251 and CN2652923. Both solutions use a significant amount of mechanical energy for mixing, about 5 w/m³ of reactor, which puts a heavy burden on the economy of the wastewater system.

### b) Internal gas mixing:

Since water mixing is extremely low, UASB reactors require internal mixing by biogas, as it is produced in high Chemical Oxygen Demand (COD) industrial wastewater or low Hydraulic retention time (HRT, 8 to 16 hours) municipal sewage at mesophilic conditions (>20°C). However, internal mixing by the evolved biogas is also markedly reduced when treating raw sewage at T<20°C, due to low biogas flow rates, producing dead space in the reactor, and as a result of this, leading to a reduction in the treatment efficiency (de Man et al. 1988).

Low biogas flow rates under these conditions result from operational conditions required for hydrolysis, which is the initial stage of AD. The hydrolysis of retained sewage particles in the sludge bed is, in general, considered to be the rate-limiting step in the overall digestion process and requires relatively long sludge retention times (SRT), depending on the used process temperature. Although a sludge retention time (SRT) of 15 days is sufficient to provide hydrolysis and methanogenesis at a process temperature of 25°C (Zeeman, G. and Lettinga (1999). Water Sci. Technol. 39, 187-194), an SRT of 75 days is required at a process temperature of 15°C. The longer the required SRT, the longer the hydraulic retention time (HRT) that has to be applied, as deduced from model developed by Zeeman and Lettinga (1999). Considering common raw sewage values of COD, influent suspended solids and % hydrolysis, high HRT from 16 to more than 48 h may result from this model. Obviously, this long HRT will result in low influent substrate levels inside the reactor and also in low biogas production rates, with upflow gas velocities ranging from 0.02 to 0.1 m/h. much lower than the minimum velocity required for bed mixing (V gas mixing> 0.5 m/h); as a consequence, the reactor does not function properly.

Consequently, when raw sewage at low temperatures is fed to a UASB reactor, the gas production will be too low, the mixing due to this gas formed inside this reactor is insufficient, and the reactor does not function properly.

1.2. EGSB reactor: in order to overcome problems of UASB reactors, a significantly higher upward water velocity is applied in the EGSB system. The use of effluent recirculation combined with taller reactors (or a high height/diameter ratio) resulted in the expanded granular sludge bed (EGSB) reactor, where a high superficial velocity is applied (van der Last & Lettinga, 1992). In this reactor design, the upflow liquid velocity ranging from 6 to 15 m/h (or said in other words, surface load of 6 to 15 expressed as m³ water/m² three phase separator surface/hour) causes the granular sludge bed to expand, eliminating dead zones and resulting in better sludge-substrate contact.

However, the EGSB reactor is unfortunately inadequate for sewage treatment as shown by Van der Last and Lettinga (1992), since a large fraction of the influent COD consists of suspended solids, and influent particulate with poor settling characteristics are washed out of the EGSB system by the high velocity of the liquid (van Haandel and Lettinga 1994). An attempt to solve this problem is found in patent EP 1806324 wherein recycled water is withdrawn either from the three phase separator or from the top of the reactor outside the three-phase separator, thus lowering the surface load and consequently the solids to be washed out.

Altogether with influent suspended solids, flocculent sludge is also washed out in the EGSB reactor. Thus while UASB reactors can function with flocculent sludge or granular sludge, due to low upflow velocity, the EGSB system uses exclusively granular sludge. This is a severe limitation when treating sewage as granulation has not been observed in any of the existing full-scale UASB reactors treating raw sewage. In all cases a flocculent type of sludge has been developed.

Besides, the energy dissipation as a result of the liquid leaving the distribution device (6-15 m/h) is high, and also gas will often enter the settling compartment. This will disturb the settling process and thus result in a loss of biomass. There have been several attempts to solve this problem, mainly by complex three-phase separators, as designed in US 5855785 by Biothane Corporation the potential of this reactor for treating unsettled sewage under low temperatures also being limited by high effluent recirculation required for this use. The long HRT applied (16-72 h) results in low influent flow rates (0.3-0.75 m/h), which are much lower than required for bed mixing (V water mixing= 6-12 m/h), thus resulting in a recycled ratio higher than 20 (recirculated/influent flow) and high pumping energy consumption. Besides, tall reactors also require high energy pumping.

Next Table 1 summarizes the problems described above:

**Table 1. Technical problems derived from UASB and EGBS reactors of the prior art**

| | **UASB reactors** | **EGSB reactors** |
|---|---|---|
| Commercial name | **Biothane UASB** | **Biobed EGSB** |
| Problems | - No gas mixing (Vgas<0.25 m/h) | - Influent suspended solids and flocculent biomass wash-out |
| | - No water mixing (Vwater <0.1 m/h) | |
| | - No expanded bed | - High energy of pumping and recirculation (x20 influent flow) |
| | - Air bubbles entrainment | |
| | - Blockage of nozzles (low outlet velocity) | |
| | | - Complex 3-phase separator |
| | - Dense "spaghetti" crossing the three-phase separator | |

### 2. CONVENTIONAL INFLUENT DISTRIBUTION SYSTEMS

In contrast to industrial UASB reactors, wherein the influent is pumped through a device located at the bottom of the reactor (EP0315233 B1), in a municipal UASB reactor the influent is typically fed from the top of the reactor through pipes that enter the municipal UASB reactor from above.

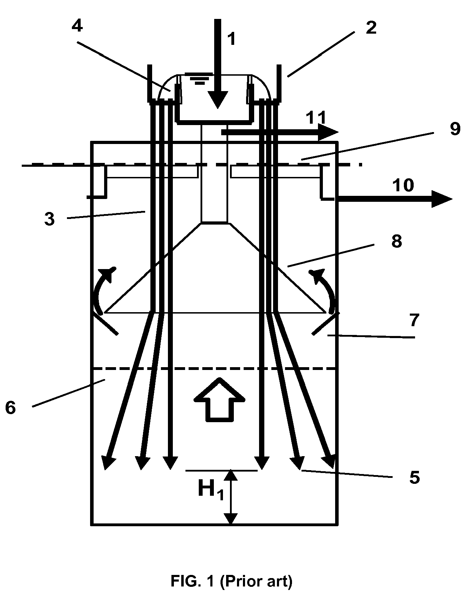

To facilitate proper influent distribution, distribution boxes are used to achieve the necessary division of flow into many equal parts. Typically a series of distribution boxes (element 2 in Figure 1, which shows the prior art) is used which divide the flow over the individual reactors. From there the final division over the individual inlet pipes (3) is achieved through one or more final circular (see Figure 1) or rectangular distribution boxes. As depicted in Figure 1, at every distribution box (2), it is important that a free fall overflow is attached/secured to the individual inlet pipes (3) over a V-notched free fall weir (4), even at peak flow. Assuming that the overflows are correctly aligned, then equal flow division is ensured.

For municipal wastewater, at least 1-2 m² per inlet point are recommended. Van Haandel and Lettinga report about experiences in several treatment plants where areas between 2-4 m² per inlet point are sufficient for satisfactory treatment efficiency, but these plants are however operating at average wastewater temperatures of above 20°C. In case the influent temperature is lower, a higher density of influent points is required as the mixing of sludge and influent substrate becomes less efficient with a decreasing temperature.

When a high inlet point density is selected, this has an effect on the construction costs. This result will be a dense "spaghetti" of pipes, that goes through three phase separators, with a costly design and construction.

Apart from the number of feed inlet points, the conventional influent distribution box has the problem of entrainment of air bubbles. Entrainment of air bubbles with the influent is unavoidable because of the turbulent free fall that occurs when the sewage passes over the influent weir in the influent distribution box and can have a number of negative effects: Oxygen toxicity to anaerobic bacteria and air pockets that temporarily block the inlet pipes. The design of inlet pipes is such that air bubbles could escape back to the pipe. According to Van Haandel et al. (1994) a downflow velocity of ≤ 0.2 m/s at the maximum flow rate will be sufficient to prevent air bubbles with a diameter of 2 mm or more from being entrained. Hence, at the top of the pipe, the low velocity required results in large piping sections and costs.

On the other hand, a high velocity is required at the outlet of the pipe, typically mounted at H1=100-200 mm from the bottom of the reactor, in order to prevent deposition around the pipe outlet, which might result in blockages. At the maximum flow rate, an outlet velocity of around 0.6 m/s, which is twice the design settling velocity for a grit channel, is considered (Van Haandel et al., 1994). Under these conditions, clogging of the nozzles often represents a serious problem resulting in uneven distribution of the wastewater above the bottom of the reactor. Hence, arrangements should be made for cleaning or flushing the inlet system.

An example of this type of influent distribution device can be found in utility model CN202046929.

Some attempts to solve the problems described above can be found in document CN103241833. This device requires high pressure pumping (2 kg/cm²) through a closed and pressurized tank. The system distributes the influent flow alternatively to inlet pipes, concentrating the entire influent flow in one single pipe. This is a good solution for increasing the flow at that point more than 2.5 m/s, hence avoiding blockage at the outlet but at the same time it has several disadvantages:
- the device distributes influent flow, without increasing it, therefore it generates low surface load (<0.25 m/h) in the case addressed in CN103241833 and does not mix properly the entire volume nor expand the bed (>6 m/h required). Only local mixing around injection points (nozzles with v> 2.5 m/s) is obtained with this device;
- high pressure pumping is not sustainable for municipal sewage treatment due to high energy use. Wastewater plants require a more sustainable operation by gravity, as in conventional influent distribution devices (Fig. 1);
- Expensive mechanical manufacturing including gear motor, shaft, plates, sealing, etc.

Another distribution system is addressed in document CN201424404. This is a continuously fed system, without pulses, for uniformly distributing water over the bottom of the reactor and forming a hydraulic cyclone to be mixed. It has the same disadvantages as conventional systems, although it is possible to easily clean a nozzle if clogged, by a flushing system. The system requires a feeding pump.

US 6,592,751 B2 discloses a device for treatment of highly contaminated wastewater which contains a large amount of suspended solids and biochemical oxygen demand. One of the embodiments (fig. 13) shows a realization of the invention for unpowered gravity flow operation, designed to provide both anaerobic and aerobic treatment of complex wastewaters whose gas production potential is larger than its liquid volume. Such a situation is possible when the waste contains degradable COD in excess of 2500 mg/l (as described in 21, 54-60). Main elements of the invention are a collection tank 1301, a one way valve 1308, an anaerobic chamber 102, one single feeding conduit 1118, a liquid filter 119, an upper chamber 104, and an aerobic tank 1313. Collection tank 1301 collects wastewater by gravity to feed anaerobic chamber 102. Valve 1308 prevents liquid back flow from lower chamber 102 into the collection tank 1301. When sufficient quantity of gas has been accumulated from anaerobic process in 102, it is discharged through the operation of a U-tube mechanism 130. And as a consequence, at regular intervals, water level in 104 lowers and backflushes the liquid filter 119.

Due to the problems described above, some essential improvements have to be made in the conventional design of UASB reactors to permit their use for unsettled sewage under sub-optimal temperatures. As explained above, there are low influent flows rates (<0.25 m/h) and low biogas flow rates (<0.1 m/h) under these conditions, resulting in low mixing capacity in the reactor and low effluent quality due to short circuiting between inlet and outlet. The modified reactor system described in the present document represents a major technological break-through, since the invention combines advantages of UASB and EGSB processes, while avoiding problems associated to both systems.

### SUMMARY OF THE INVENTION

The present invention, according to claim 1, is directed to an influent, non pressurized wastewater injection and mixing device for treatment of unsettled sewage under sub-mesophilic temperatures (in the case of the present invention it means equal or under 20°C) in anaerobic reactors of UASB type. The main objectives of the present invention are:
- feeding (and thus mixing) the sludge bed of the UASB reactor by gravity, that is to say in the absence of a pump or any other similar injection device for injecting the wastewater flow, and thus with low energy consumption, avoiding effluent recirculation, influent pressurized flow or mechanical stirring;
- obtaining an upflow liquid velocity in the reactor between 6 and 12 m/h, which is able to fluidize and expand the bed to avoid channeling and dead zones, and allow the use of the entire reactor volume efficiently;
- distributing the influent wastewater as evenly as possible over the reactor surface area;
- avoiding blockage in inlet pipes and nozzles; and
- avoiding dense "spaghetti" crossing the three phase separator and dense nozzles distribution, thanks to a simple pipe distribution.

To meet those goals over the prior art, the influent wastewater injection and mixing device of the present invention comprises the features of claim 1.

The distance at which the discharge point of the injection nozzles is located with respect to the bottom of the reactor/sludge bed significantly contributes to the way in which the injection device promotes a fluidized/expanded sludge bed, thus improving the sludge-wastewater contact. The distance depends on the size of the reactor and the whole design of the injection device.

Besides, the density of nozzles, i.e. the number of nozzles at the string/s is relevant for achieving the goals, and said number also varies depending on the size of the reactor; in a preferred embodiment the number is calculated to obtain a density of 1 nozzle per 4-5 m² reactor surface area (that is to say, in a preferred case the injection device comprises 1 nozzle per 4-5 m² reactor surface area); this is a significant lower density when compared with conventional UASB reactors, due to higher discharge flows. Besides, the diameter of the nozzle is calculated to obtain a proper outlet velocity of wastewater. For instance, in a preferred embodiment, the diameter of the nozzle permits an outlet velocity of 3-5 m/s, high enough to avoid clogging at the point of discharge thereof.

Thanks to said configuration of the injection device of wastewater inside the reactor, the feeding tank accumulates hydraulic energy in the form of what is named *effective wastewater volume,* which is a partial, specific volume of the total volume of the feeding tank that determines the amount of water of a pulse generated when the automatic valve is open. The effective volume inside the feeding tank, that must range between 0.5% and 1.5% of the total volume of the reactor, is defined by an upper (maximum) effective wastewater level Hₘₐₓ and a lower (minimum) effective wastewater level Hₘᵢₙ, in such a way that the hydraulic energy (effective volume) is released in the form of pulses of wastewater and said pulses flow downwards through the inlet manifold by draining it with the automatic valves that are open when the effective volume inside the feeding tank reaches a specific maximum height or level (Hₘₐₓ) up to 2.5m above the water level inside the reactor. On the contrary, the pulse of wastewater flow ends when the effective volume of the wastewater inside the feeding tank reaches a minimum height or level Hₘᵢₙ never lower than 0.5m above the water level inside the reactor. That is to say, the hydraulic energy of the wastewater pulse depends on the difference between the maximum height level and the minimum height level reached by the wastewater inside the tank that define the effective volume, both Hₘₐₓ and Hₘᵢₙ are always different and never the same. The maximum height level reached by the effective volume of wastewater (that can also be named as "effective equalization volume") inside the tank acts as a high level "alarm" that opens the valve for producing the wastewater pulse; at that moment, the effective volume is full. The Hₘₐₓ preferably ranges from 1.5 to 2.5m above the reactor water level. The minimum height level acts as a "cut in" level that closes the valve, since at that moment no effective volume remains inside the tank, and the tank needs to be refilled; the Hₘᵢₙ preferably ranges from 0.5 to 1.5m above the reactor water level. In particular, the injection device comprises means for measuring the minimum and maximum effective wastewater levels inside the feeding tank, that automatically control the valve or valves, i.e. opening or closing. Particularly, the valve or valves are automatically controlled by means of a water level sensor that measures the effective water level inside the tank (the minimum and the maximum levels) and sends a signal to control means (for instance, PLC o Programmable Logic controller, which may comprise a transmitter and a controller) which acts on the valve, particularly the water level sensor measures the wastewater level inside the feeding tank and sends a signal to the control system for automatically closing the valve when the effective water level reaches Hₘᵢₙ, and for automatically opening the valve when the water level reaches Hₘₐₓ. That is to say, it is possible that only one water level sensor is included in the injection device for measuring both, the minimum effective level and the maximum effective level. Nevertheless, a first and a second level sensor can also be used for measuring the minim level and the maximum level, respectively.

The level sensor can be located either inside or outside the feeding tank for measuring the wastewater level. For instance, in a particular embodiment, a piezometric (or maybe a conductive) level sensor is used, which is located inside the feeding tank for measuring the water level through the water column pressure. This pressure sensor is submerged at a fixed level under the water surface; the pressure sensor measures the equivalent hydrostatic pressure of the water above the sensor diaphragm. An alternative contact level sensor that can be used inside the tank is for instance a floating water level switch, which is cheaper but does not provide a continuous signal, only one signal at the maximum water level and a second signal at the minimum. On a different, particular embodiment, a non contact water level sensor is used for controlling the effective water level, said level sensor being for instance a ultrasonic sensor, which operates on the basic principle of using sound waves to determine fluid level. The non contact water level sensor is located outside the feeding tank above the water level, in such a way that the sensor measures the distance to the sheet of water, thus knowing where the water level is all the time. The choice of a particular sensor level depends on the type of wastewater; in this sense, it was observed that piezometric level sensors perform better than non contact level sensors when wastewater containing fat and foam is injected.

The signal of the level sensor is sent to the control means, and said control means act opening or closing the valve. The PLC is programmed for the two set points of interest: the maximum and the minimum levels.

The minimum height or level of wastewater inside the tank should always be kept above the first end of the inlet manifold as well, to avoid the air bubbles entrainment. Said first end of the inlet manifold is particularly connected to the outlet of the feeding tank located at the bottom thereof; the outlet is then at the base of the tank for allowing the pulse of wastewater to come out downwards from the tank through the inlet manifold. Nevertheless, this specific location of the outlet of the tank is not a limiting feature of the device, since it may let the flow come out directly downwards from the bottom of the tank as stated, or alternatively it may let the flow come out laterally at the point in which the bottom of the tank joints the lateral wall thereof. The outlet (and the inlet manifold) should let the water of the bottom come out in order to avoid the buildup of solids.

The wastewater injection device produces an upflow liquid velocity in the reactor ranging from 0 m/h between pulses up to a maximum of 6-12 m/h when a pulse of wastewater flow is generated, that is to say, during enough time to expand the bed but not so long as to wash out suspended solids with the effluent. As stated, the feeding tank is always located above the water level inside the reactor, and has an effective volume of between 0.5% and 1.5% of the total volume of the entire reactor, in such a way that its own wastewater level fluctuates from 0.5 to 2.5 m above the reactor water level for producing the flow pulses by gravity. According to the above, the valve opens for the passing of the wastewater pulse when the wastewater level inside the tank reaches a maximum effective level Hₘₐₓ, and the valve closes at a minimum effective level Hₘᵢₙ. Between pulses, the effective volume fluctuates between both levels, maximum and minimum. Preferably, the effective volume of the feeding tank is 1.0% of the total volume of the reactor.

It should be taken into account that the UASB reactors as mentioned in the present invention are as defined and known in the prior art. For instance, it is known that standard UASB reactors usually comprise a three-phase separator, a granular or a flocculent fluidized/expanded sludge bed, a digester having deflectors at the top thereof, a gas collector and weirs for the outlet of the wastewater overflows, among other elements. In a more preferred case, the UASB reactor of the present invention has a granular sludge or a flocculent sludge.

The present invention is also directed to a method for injecting and mixing influent, non-pressurized wastewater in anaerobic reactors of UASB type by means of the device described above to fluidize the sludge bed with unsettled sewage and under sub-mesophilic temperatures, characterized in that the method comprises the steps of claim 6.

According to the above, the time lapse between the opening and the closing of the valve, that is the time for gradually draining the tank until the wastewater level reaches the Hₘᵢₙ (and the valve is closed), usually varies between 15 and 30 seconds in the present invention. The time for draining the tank is essential for the magnitude of the flow produced to expand the sludge bed.

As explained above when the injection device is described, the effective volume fluctuates inside the tank between a maximum or higher effective level that is equal or lower than 2.5m above the water level inside the reactor, and a minimum or lower level equal or higher than 0.5m. In a preferred case, the tank is fed with a flow of wastewater until the effective volume thereof reaches a maximum height or level Hₘₐₓ inside the tank between 1.5 and 2.5 m above the water level inside the reactor, and then the valve is open. Besides, the valve is closed when the wastewater level inside the tank reaches a minimum height or level Hₘᵢₙ between 0.5 and 1.5 m above the water level inside the reactor. It is obvious that the maximum height or level of wastewater Hₘₐₓ inside the reactor is always different and higher than the minimum height or level of wastewater Hₘᵢₙ inside the reactor, since the effective volume defined between the two levels determines the hydraulic energy of the wastewater pulse.

As stated before, the minimum wastewater level should not only be above the reactor water level, but also above the inlet manifold to avoid the entrainment of air bubbles in the reactor.

Wastewater pulses generated with such a device and following the present method produce a flow from the feeding tank through the inlet manifold that is 25 to 80 times higher than influent wastewater flow of this type of distribution systems, thus resulting in an upflow liquid velocity into the reactor that varies from 0 m/h between pulses (no pulse at all) to a maximum of between 6 and 12 m/h when the wastewater pulse is generated, thus creating enough energy to expand the bed.

Thanks to said method, together with the configuration of the injection device, the velocity of the wastewater flow/pulse through the linlet manifold and distribution strings ranges from 0 m/h between pulses (no pulse) up to 1-3 m/s when a pulse is generated. Besides, the velocity of water injection achieved through the nozzles ranges from 0 m/h (between pulses) up to 3-5 m/s when a pulse is generated.

A third object of the present disclosure is an upflow anaerobic sludge bed (UASB) reactor for treatment of unsettled sewage under sub-mesophilic temperatures characterized in that it comprises the influent, non-pressurized wastewater injection and mixing device defined in the present disclosure. Said injection device are the means for injecting, mixing and distributing the inlet wastewater in the UASB reactor, and both the injection device and the reactor are connectable by means of the string or strings of the former that enters the latter and are buried in the sludge bed.

The described device and method provide the following advantages:
- Improvement of removal efficiencies of Total Chemical Oxygen Demand COD_{T}), Soluble Chemical Oxygen Demand (COD_{S}) and total suspended solids (TSS).
- Obtaining higher biogas yields than conventional UASB reactors for this use (see Examples 1 and 2).
- Excellent clarification, due to efficient retention of poor settling characteristics solids by static clarification between pulses. This is of the most importance for this use, because:
   o It makes the system suitable for both granular and flocculent sludge beds, as UASB reactors. In most cases, sewage does not promote the formation of granular biomass, therefore it is important to provide a system that can retain flocculent biomass;
   o Removal of high influent colloidal and suspended solids, which are entrapped in the sludge bed with further hydrolysis and anaerobic degradation. This fraction represents the highest percentage of total COD in municipal sewage.
- Low energy consumption: A fluidized bed is obtained by high flow gravity pulses without effluent recirculation nor a taller reactor as in EGSB reactors.
- Lower operation and maintenance costs, since the pipe and nozzle blockage is avoided by high flow pulses without a high pressure pump nor continuous cleaning.
- Simple design: Flocculent sludge is retained without dense crossing "spaghetti" as in municipal UASB reactors, nor complex three phase separator design as in EGSB reactors.

A comparison between the most important features defining the present device and those of the prior art (also shown in Table 1) is shown in Table 2.

**Table 2. Comparison of main characteristics of UASB reactors, EGSB reactors and these types of systems comprising the present injection and mixing device**

| **REACTOR TYPE** | | **UASB** | **EGSB** | **Reactor comprising the present device** |
|---|---|---|---|---|
| | **Commercial name** | **Biothane UASB** | **Biobed EGSB** | **----------** |
| **GENERAL DESIGN PARAMETERS** | Type of sludge | Flocculent or granular | Granular | Flocculent or granular |
| | Mixing energy | Gas produced; High COD or low HRT is required. | High upward liquid velocity by recirculation, Gas produced. | Pulses |
| | Gas | 0.4-1.5 | 0.5-7 | 0.01-1 |
| | velocity (m/h) | | | |
| | Liquid velocity (m/h) | 0.5-1 | 6-15 (with recirculation) | Varies from 0,1-1 (no pulse) to 6-12 (pulses) |
| | Reactor Height (m) | 5.5-6.5 | 12-18 | 5-6 |
| **SEWAGE AT T<20°C** | HRT (h) | 16-48 | 16-48 | 16-48 |
| | SRT (d) for hydrolysis | 100-140 | 100-140 | 100-140 |
| | Upflow Liquid velocity in the reactor (m/h) | 0.1-0.25 | 0.3-0.75 (influent) 6-15 (high recirculation required) | Varies from 0.1-1 (no pulse) to 6-12 (pulses) |
| | Gas velocity (m/h) | 0.02 to 0.1 | 0.06-0.3 | 0.02-0.1 |
| | Advantages | - Retain influent suspended solids and flocculent biomass | - Expanded bed: Excellent mixing by recirculation. | - Expanded bed: Excellent mixing by pulses |
| | | | - No air bubbles entrainment. | -No entrainment of air bubbles |
| | | - No granulation required | | |
| | | | - No blockage of nozzles. | - No blockage of nozzles |
| | | - Low pumping energy (low height and no recirculation in most cases) | | |
| | | | | - Retain influent suspended solids and flocculent biomass. |
| | | - Simple 3-phase separator. | | |
| | | | | - Low pumping energy (low height and no recirculation). |
| | | | | - Simple 3-phase separator without vertical pipe crossing |

### BRIEF DESCRIPTION OF THE DRAWINGS

**Figure 1** **(Prior art)** illustrates a well-known schematic representation of a High rate anaerobic reactor, of the Upflow Anaerobic Sludge Bed type (UASB reactor), having a conventional influent wastewater distribution device.
**Figure 2** illustrates a schematic representation of a High rate anaerobic reactor, of the Upflow Anaerobic Sludge Bed type (UASB reactor), with the influent wastewater injection and mixing device according to a particular embodiment of the present invention.

### DETAILED DESCRIPTION OF THE INVENTION

Figure 1 illustrates the prior art, and shows a conventional, well-known USAB reactor fed with an influent wastewater flow (1) and having a conventional influent distribution box (2) by gravity over several V-notched free fall weirs (4), and individual vertical inlet pipes (3). The water fed at the top of the reactor is injected at the bottom thereof through the end (5) of inlet pipes, which are at a height H₁ above the bottom of the sludge bed (6)/the reactor and it passes up through a sludge bed (6). The biomass, water and biogas are separated at the top of the digester by a conventional deflector (7) and a three-phase separator (8). The flow of gas (11) is collected, and the biomass settles back to the active volume of the reactor while the flow of treated water (10) overflows through weirs (9).

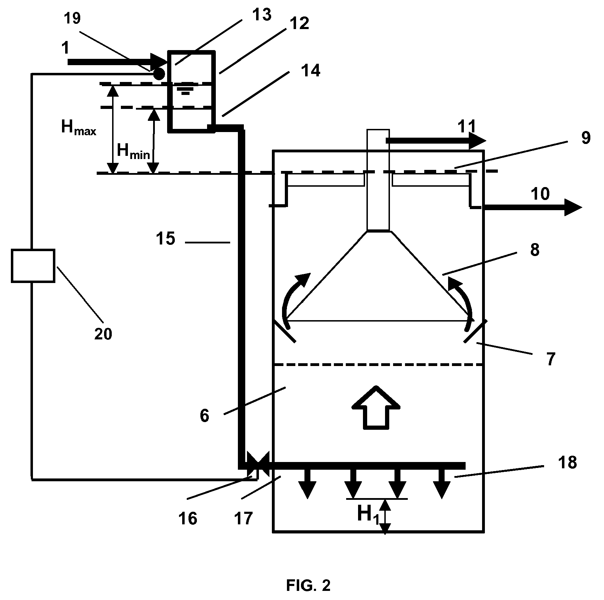

The particular influent wastewater injection and mixing device object of the present invention is illustrated in Figure 2, used in an anaerobic reactor of the USAB type to fluidize the sludge bed (6) with unsettled sewage and working under sub-mesophilic temperatures.

The wastewater injection and mixing device comprises a feeding, pulsed and non-pressurized tank (12) having an effective volume of 1% of the total volume of the reactor, the tank being located outside the reactor and above the reactor water level, the wastewater level inside the feeding tank being kept (and fluctuating between pulses) at a height between 0.5 to 2.5 m above the reactor water level. The tank (12) is fed with a flow of wastewater (1) through an inlet (13) located at the top side thereof, usually by pumping the flow (1). Wastewater is accumulated in the tank (12) until it reaches a maximum height Hₘₐₓ inside the tank (i.e. the tank is full) ranging from 1.5 to 2.5m above the water level inside the reactor. Then a valve (16) is automatically controlled by a non contact water level sensor (19) which is connected to control means (20) (Programmable Logic Controller), in such a way that a flow of wastewater in the form of a pulse with a volume equal to the effective volume accumulated inside the tank is generated by gravity for 15-30 seconds through an inlet manifold (15) that connects at one end the outlet (14) of the feeding tank (12) with a distribution string (17) at the other end by means of the valve (16), said valve (16) letting the wastewater pulse pass through it and enter the reactor. The distribution string (17) connects the automatic valve (16) outside the reactor with the inside thereof, being buried in the sludge bed (6). The wastewater pulse is then injected from the distribution string (17) to the bottom of the reactor through injection nozzles (18) that form part of the distribution string (17) and that are located above the bottom of the reactor (i.e. that is the bottom of the sludge bed (6)), the nozzles being located at a height H₁ of 200-300 mm above the bottom, and whose density is of 1 nozzle/4-5 m² reactor surface area. The diameter of the nozzles is calculated to produce a velocity at injection points from 0 m/h between pulses up to 3-5 m/s when a pulse is generated. The valve (16), automatically controlled by the water level sensor (19), closes when the wastewater level inside the feeding tank (2) reaches a lower height Hₘᵢₙ that is from 0.5 to 1.5 m above the water level inside the reactor and always being above the outlet of the feeding tank entrance (14) to avoid the entrainment of air bubbles in the reactor. The pulses generated with such a device produces a flow in the inlet manifold (15) that is from 25 to 80 times higher than the influent wastewater flow (1), thus creating enough energy to expand the bed (6) by gravity.

The rest of the configuration shown in Figure 1 is identical to conventional UASB reactors, and may vary depending on the case and experimental situation: apart from the injection device described above, the reactor further comprises the cited granular or flocculent fluidized/expanded sludge bed (6), a conventional deflector (7), such as baffles; a three-phase separator (8), effluent weirs (9) for the outlet of the effluent (i.e. flow of treated water (10)), and a gas collector for the biogas flow (11). This way, the wastewater injected with the claimed device passes up through the sludge bed (6), and then the biomass, the treated water (effluent) and the biogas are separated at the top of the digester by a conventional deflector, i.e. the effluent weirs (9) and the three-phase separator (8). That is to say, the flow of gas (11) is collected, the biomass settles back to the active volume of the reactor while the flow of treated water (10) leaves the reactor through an effluent outlet since the water overflows through weir/s (9).

The injection device produces an upflow liquid velocity in the reactor ranging from 0 m/h between pulses (i.e. no pulse) up to a maximum of 6-12 m/h when a pulse is generated, which is enough time to expand the bed but not so long as to wash out suspended solids with the effluent.

### EXAMPLES

### Example 1. Experimental comparative study: injection device according to the present invention as defined in Figure 2 vs. conventional distribution system in a UASB reactor for treating un-settled wastewater under sub-mesophilic conditions.

Raw wastewater was fed to two identical UASB reactors, both being inoculated with *flocculent* sludge in Southern Spain (Chiclana de la Frontera, Cádiz), at ambient temperature, one of them having a conventional distribution system and the other one having the instant injection device. The present injection device is adapted to the experimental method, and that is the reason why for instance only one nozzle is comprised in the string. Said feature is not a limitation of the invention, but an aspect that is adapted to experimental conditions.

Main design parameters of the system, said system including both reactor and injection and mixing device are:

**REACTOR PARAMETERS**

| | | |
|---|---|---|
| - Reactor volume | 20 | m³ |
| - Reactor diameter | 2.5 | m |
| - Reactor area | 4.91 | m² |

**INJECTION AND MIXING WASTEWATER DEVICE**

| Feed tank | | |
|---|---|---|
| - Tank diameter | 600 | mm |
| - Feed tank volume | 0.201 | m³ |
| - Tank/reactor volume ratio | 1.0 | % |
| - Hmax | 1.88 | m |
| - Hₘᵢₙ | 1.17 | m |
| - Number of inlet manifolds | 1 | |
| - Number of distribution strings | 1 | |
| - Inlet nozzle diameter | 67.8 | mm |
| - Number of nozzles | 1 | |
| - Nozzle density | 4.91 | m² surface reactor/nozzle |
| - Injection distance from the nozzle to the bottom of the reactor | 300 | mm |

**PROCESS PARAMETERS**

| | | |
|---|---|---|
| - Influent wastewater flow | 0,55 | m3/h |
| - Hydraulic retention time | 36 | h |
| - Inlet manifold flow during pulses | 43 | m³/h |
| - Ratio Inlet manifold flow/Influent flow | 78 | |
| - Tank Draining time | 16.6 | s |
| - Velocity in nozzles | 3.3 | m/s |
| - Upflow liquid velocity during pulses | 8.9 | m/h |

**WASTEWATER PARAMETERS**

| | | |
|---|---|---|
| - Temperature | 16-19 | °C |
| - COD_{S} | 255±63 | mg/l |
| - COD_{T} | 255±63 | mg/l |
| - TSS | 203±87 | mg/l |
| - Sulphate | 98±42 | mg/l |
| - Ammonium | 46±10 | mg/l |

Next, the main experimental results obtained when comparing the instant injection device with the conventional one are shown:

| RESULTS | UASB reactor | Present injection device |
|---|---|---|
| COD_{T} (%) | 34.3 | 65.8 |
| RE Sulphate (%) | 28.5 | 84.4 |
| m³ CH4/kg COD_{removed} | 0.10 | 0.12 |
| Biogas production (m³/day) | 0.29 | 0.71 |

The results obtained represent an important, significant removal increase in COD_{T} (192%) and biogas production (245%) parameters of the UASB reactor thanks to the influent injection device described in the present disclosure.

### Example 2. Experimental comparative study: injection device according to the present invention as defined in Figure 2 vs. conventional distribution system in a UASB reactor for treating raw wastewater having a granular sludge bed.

Raw wastewater was fed to two identical UASB reactors, both being inoculated with *granular* sludge in Southern Spain (Chiclana de la Frontera, Cádiz), at ambient temperature, one of them having a conventional distribution system and the other one having the instant injection device. The parameters defined in Example 1 applied also to this experimental case, but with an increase of the influent wastewater flow:

**PROCESS PARAMETERS**

| | | |
|---|---|---|
| - Influent wastewater flow | 0.83 | m3/h |
| - Hydraulic retention time | 24 | h |
| - Inlet manifold flow during pulses | 43 | m³/h |
| - Ratio Inlet manifold flow/Influent flow | 51 | |
| - Tank Draining time | 16.6 | s |
| - Velocity in nozzles | 3.3 | m/s |
| - Upflow liquid velocity during pulses | 8.9 | m/h |

Next, the main experimental results obtained when comparing the instant injection device with the conventional one are shown:

| RESULTS | UASB reactor | Present injection device |
|---|---|---|
| COD_{S}(%) | 14.4 | 37.3 |
| RE Sulphate (%) | 36 | 96.5 |
| m³ CH4/kg COD_{removed} | 0.06 | 0.09 |
| Biogas production (m³/day) | 0,29 | 0,49 |

The results obtained represent an important, significant removal increase in COD_{S} (259%) and biogas production (169%) parameters of the USAB reactor thanks to the influent injection device described in the present disclosure.

## Claims

1. An influent, non-pressurized wastewater injection and mixing device for treatment of unsettled sewage under sub-mesophilic temperatures in UASB reactors, **characterized in that** it comprises:
- a wastewater feeding tank (12), located outside the reactor and above the reactor water level, having an effective wastewater volume for generating pulses by gravity ranging from 0.5% to 1.5% of the total reactor volume, said effective volume inside the tank (12) being at a height between a minimum wastewater level Hₘᵢₙ equal or higher than 0.5 m and a maximum wastewater level Hₘₐₓ equal or lower than 2.5 m above the water level of the reactor, Hₘₐₓ being always higher than Hₘᵢₙ for producing the hydraulic energy of the pulse; and the feeding tank (12) having an upper inlet (13) as well as an outlet (14) at the bottom for the wastewater, and being connected to the reactor through
- an inlet manifold (15), that at one end connects downwards the outlet (14) of the feeding tank (12) with
- one or more wastewater distribution strings (17) at a second end, each distribution string (17) having a valve (16) automatically controlled by the effective wastewater level inside the feeding tank (12), the string or strings (17) being buried in the sludge bed (6) inside the reactor for distributing the wastewater pulses to the bottom of the reactor through
- injection nozzles (18) having a downwards discharge point located at a height of between 200 and 300 mm from the bottom of the reactor to avoid dead zones and energy losses, and
- a water level sensor (19) for measuring the minimum effective wastewater level Hₘᵢₙ and the maximum effective wastewater level Hₘₐₓ inside the feeding tank (12), capable of sending a signal to control means (20) that act closing or opening the valve (16).

2. The device of claim 1, wherein the feeding tank (12) has a wastewater effective volume of 1.0% of the total volume of the reactor.

3. The device of any one of previous claims 1 or 2, wherein the reactor comprises a granular or flocculent fluidized sludge bed (6).

4. The device of any one of previous claims 1 to 3, wherein the density of nozzles (18) in the distribution strings (17) is of 1 nozzle (18) per 4-5 m² reactor surface area, and the diameter of the nozzle (18) allows a velocity of 3-5 m/s of the flow of wastewater.

5. The device of any one of previous claims 1 to 4, wherein the minimum wastewater level inside the feeding tank (12) is at a height comprised between 0.5 and 1.5m above the water level inside the reactor, and the maximum wastewater level inside the feeding tank (12) is at a height comprised between 1.5m and 2.5m above the water level inside the reactor, the maximum level being higher than the minimum level of wastewater inside the reactor.

6. A method for injecting and mixing influent, non pressurized wastewater in high rate anaerobic reactors by means of the device defined in any one of claims 1 to 5 to fluidize the sludge bed (6) with unsettled sewage and under sub-mesophilic temperatures, **characterized in that** the method comprises:
- feeding the tank (12) with a flow (1) of wastewater;
- automatically opening the valve (16) by means of the water level sensor (19) that sends a signal to the control means (20) when the effective volume inside the tank (12) reaches the maximum level Hₘₐₓ to generate a pulse of flow of wastewater by gravity that passes through the inlet manifold (15) that connects the outlet (14) of the feeding tank (12) with the distribution string (17), thus injecting said pulse of wastewater into the sludge bed reactor (6);
- distributing the pulse of wastewater from the distribution string (17) to the bottom of the sludge bed (6) of the reactor through the injection nozzles (18), by gravity; and
- automatically closing the valve (16) by means of the water level sensor (19) that sends a signal to the control means (20) when the effective volume inside the tank (12) reaches the minimum level Hₘᵢₙ to cut the pulse.

7. The method according to the previous claim 6, wherein the velocity of the wastewater pulse inside the reactor for expanding the sludge bed (6) reaches up to a maximum of between 6 and 12 m/h.

8. The method according to any one of claims 6 or 7, wherein the valve (16) opens when the maximum wastewater level Hₘₐₓ is comprised between 1.5m and 2.5m above the water level inside the reactor, and the valve (16) closes when the minimum wastewater level Hₘᵢₙ is comprised between 0.5m and 1.5m above the water level inside the reactor, Hₘₐₓ being always higher than Hₘᵢₙ for producing the hydraulic energy of the pulse.

9. The method according to any one of claims 6 to 8, wherein the difference between the maximum wastewater level and the minimum wastewater level inside the tank (12) defines an effective volume of 1 % of the total reactor volume.

10. The method according to any one of claims 6 to 9, wherein the velocity of the wastewater pulse through the linlet manifold (15) and the distribution string (17) reaches up to 1-3 m/s, and the velocity of the water injection through the nozzles (18) reaches up to 3-5 m/s.

11. An upflow anaerobic sludge bed (UASB) reactor for treatment of unsettled sewage under sub-mesophilic temperatures **characterized in that** it comprises the influent, non-pressurized wastewater injection and mixing device defined in any one of claims 1 to 5.

## Patentansprüche

1. Abwasserinjektions- und Mischvorrichtung für zulaufendes, druckloses Abwasser zur Behandlung von nicht abgesetztem Schmutzwasser unter submesophilen Temperaturen in UASB-Reaktoren, **dadurch gekennzeichnet, dass** sie umfasst:
- einen Abwasserspeisebehälter (12), der außerhalb des Reaktors und oberhalb des Wasserstands des Reaktors untergebracht ist, mit einem effektiven Abwasservolumen zum Erzeugen von Impulsen durch Schwerkraft im Bereich von 0,5 % bis 1,5 % des Gesamtvolumens des Reaktors, wobei das effektive Volumen im Innern des Behälters (12) auf einer Höhe zwischen einem minimalen Abwasserpegel Hₘᵢₙ gleich oder höher ist als 0,5 m und einem maximalen Abwasserpegel Hₘₐₓ gleich oder niedriger ist als 2,5 m über dem Wasserstand des Reaktors, wobei Hₘₐₓ zum Erzeugen der hydraulischen Energie des Impulses immer höher ist als Hₘᵢₙ; und der Speisebehälter (12) einen oberen Einlass (13) sowie einen Auslass (14) am Boden für das Abwasser aufweist und mit dem Reaktor verbunden ist durch
- eine Einlass-Sammelleitung (15), die an einem Ende nach unten den Auslass (14) des Speisebehälters (12) verbindet mit
- einem oder mehreren Abwasser-Verteilerrohrsträngen (17) an einem zweiten Ende, wobei jeder Verteilerrohrstrang (17) ein Ventil (16) aufweist, das durch den effektiven Abwasserpegel im Innern des Speisebehälters (12) automatisch gesteuert wird, der Rohrstrang oder die Rohrstränge (17) in dem Schlammbett (6) im Innern des Reaktors versenkt werden, um die Abwasserimpulse zum Boden des Reaktors zu verteilen, durch
- Injektionsdüsen (18) mit einem Entleerungspunkt nach unten, der sich in einer Höhe zwischen 200 und 300 mm vom Boden des Reaktors befindet, um Totbereiche und Energieverluste zu vermeiden, und
- einen Wasserpegelsensor (19) zu Messung des minimalen effektiven Abwasserpegels Hₘᵢₙ und des maximalen effektiven Abwasserpegels Hₘₐₓ im Innern des Speisebehälters, geeignet zum Senden eines Signals an eine Regeleinrichtung (20), die das Schließen oder Öffnen des Ventils (16) bewirkt.

2. Vorrichtung nach Anspruch 1, wobei der Speisebehälter (12) ein effektives Abwasservolumen von 1,0 % des Gesamtvolumens des Reaktors aufweist.

3. Vorrichtung nach einem der vorhergehenden Ansprüche 1 oder 2, wobei der Reaktor eine Wirbelschicht aus granuliertem oder flockigem Schlamm (6) umfasst.

4. Vorrichtung nach einem der vorhergehenden Ansprüche 1 bis 3, wobei die Dichte von Düsen (18) in den Verteilerrohrsträngen (17) 1 Düse (18) pro 4 bis 5 m² Reaktoroberfläche beträgt und der Durchmesser der Düse (18) eine Geschwindigkeit von 3 bis 5 m/s des Abwasserflusses erlaubt.

5. Vorrichtung nach einem der vorhergehenden Ansprüche 1 bis 4, wobei der minimale Abwasserpegel im Innern des Speisebehälters (12) bei einer Höhe liegt, die zwischen 0,5 und 1,5 m über dem Wasserpegel im Innern des Reaktors eingeschlossen ist, und der maximale Abwasserpegel im Innern des Speisebehälters (12) bei einer Höhe liegt, die zwischen 1,5 m und 2,5 m über dem Wasserpegel im Innern des Reaktors eingeschlossen ist, wobei der maximale Pegel höher ist als der minimale Pegel des Abwassers im Innern des Reaktors.

6. Verfahren zur Injektion und Mischung von zulaufendem, drucklosen Abwasser in anaeroben Hochlastreaktoren mittels der in einem der Ansprüche 1 bis 5 definierten Vorrichtung, um das Schlammbett (6) mit nicht abgesetztem Schmutzwasser und unter submesophilen Temperaturen fließfähig zu machen, **dadurch gekennzeichnet, dass** das Verfahren umfasst:
- Beschicken des Behälters (12) mit einem Abwasserstrom (1);
- automatisches Öffnen des Ventils (16) durch den Wasserpegelsensor (19), der ein Signal an die Regeleinrichtung (20) sendet, wenn das effektive Volumen im Innern des Behälters (12) den maximalen Pegel Hₘₐₓ erreicht, um einen Impuls von Abwasserstrom durch Schwerkraft zu erzeugen, der durch die Einlass-Sammelleitung (15), die den Auslass (14) des Speisebehälters (12) mit dem Verteilerrohrstrang (17) verbindet, hindurch geht, womit der Abwasserimpuls in den Schlammbettreaktor (6) injiziert wird;
- Verteilen des Abwasserimpulses aus dem Verteilerrohrstrang (17) zum Boden des Schlammbetts (6) des Reaktors durch die Injektionsdüsen (18), mit Schwerkraft; und
- automatisches Schließen des Ventils (16) durch den Wasserpegelsensor (19), der ein Signal an die Regeleinrichtung (20) sendet, wenn das effektive Volumen im Innern des Tanks (12) den minimalen Pegel Hₘᵢₙ erreicht, um den Impuls abzubrechen.

7. Verfahren nach dem vorhergehenden Anspruch 6, wobei sich die Geschwindigkeit des Abwasserimpulses im Innern des Reaktors zur Ausdehnung des Schlammbeckens (6) bis zu einem Maximum von zwischen 6 und 12 m/h erstreckt.

8. Verfahren nach einem der Ansprüche 6 oder 7, wobei das Ventil (16) öffnet, wenn der maximale Abwasserpegel Hₘₐₓ zwischen 1,5 m und 2,5 m über dem Wasserpegel im Innern des Reaktors eingeschlossen ist, und das Ventil (16) schließt, wenn der minimale Abwasserpegel Hₘᵢₙ zwischen 0,5 m und 1,5 m über dem Wasserpegel im Innern des Reaktors eingeschlossen ist, wobei Hₘₐₓ zum Erzeugen der hydraulischen Energie des Impulses immer höher als Hₘᵢₙ ist.

9. Verfahren nach einem der Ansprüche 6 bis 8, wobei die Differenz zwischen dem maximalen Abwasserpegel und dem minimalen Abwasserpegel im Innern des Behälters (12) ein effektives Volumen von 1 % des gesamten Reaktorvolumens definiert.

10. Verfahren nach einem der Ansprüche 6 bis 9, wobei sich die Geschwindigkeit des Abwasserimpulses durch die Einlass-Sammelleitung (15) und den Verteilerrohrstrang (17) bis zu 1 bis 3 m/s erstreckt, und sich die Geschwindigkeit der Wasserinjektion durch die Düsen (18) bis zu 3 bis 5 m/s erstreckt.

11. Anaerober Aufströmschlammbett-(UASB)-Reaktor zur Behandlung von nicht abgesetztem Schmutzwasser unter submesophilen Temperaturen, **dadurch gekennzeichnet, dass** er die in einem der Ansprüche 1 bis 5 definierte Injektions-und Mischungsvorrichtung für zulaufendes, druckloses Abwasser umfasst.

## Revendications

1. Dispositif de mélange et d'injection d'eaux usées non pressurisé d'entrée pour le traitement d'eaux d'égout non stabilisées à des températures sub-mésophiles dans des réacteurs UASB, **caractérisé en ce qu'**il comprend :
un réservoir (12) d'alimentation en eaux usées, situé à l'extérieur et au-dessus du niveau d'eau de réacteur, ayant un volume d'eaux usées effectif pour générer des impulsions par gravité allant de 0,5% à 1,5% du volume total du réacteur, ledit volume effectif à l'intérieur du réservoir (12) étant à une hauteur entre un niveau d'eaux usées minimum Hₘᵢₙ supérieur ou égal à 0,5 m et un niveau d'eaux usées maximal Hₘₐₓ inférieur ou égal à 2,5 m au-dessus du niveau d'eau du réacteur, Hₘₐₓ étant toujours supérieur à Hₘᵢₙ pour produire l'énergie hydraulique de l'impulsion ; et le réservoir (12) d'alimentation ayant un orifice d'entrée supérieur (13) ainsi qu'un orifice de sortie (14) au fond pour les eaux usées, et étant connecté au réacteur par
un distributeur d'entrée (15), qui à une extrémité se connecte en aval de l'orifice de sortie (14) du réservoir (12) d'alimentation avec
une ou plusieurs lignes de distribution d'eaux usées (17) à une seconde extrémité, chaque ligne de distribution (17) comportant une vanne (16) commandée automatiquement par le niveau d'eaux usées effectif à l'intérieur du réservoir (12) d'alimentation, la ligne ou les lignes (17) étant enterrées dans le lit de boue (6) à l'intérieur du réacteur pour distribuer les impulsions d'eaux usées vers le fond du réacteur à travers
des buses d'injection (18) ayant un point de décharge vers le bas situé à une hauteur d'entre 200 et 300 mm du fond du réacteur pour éviter des zones mortes et des pertes d'énergie, et
un capteur de niveau d'eau (19) pour mesurer le niveau d'eaux usées effectif minimum Hₘᵢₙ et le niveau d'eaux usées effectif maximal Hₘₐₓ à l'intérieur du réservoir (12) d'alimentation, pouvant envoyer un signal à des moyens de commande (20) qui agissent pour fermer et ouvrir la vanne (16).

2. Dispositif selon la revendication 1, dans lequel le réservoir (12) d'alimentation a un volume effectif d'eaux usées de 1,0% du volume total du réacteur.

3. Dispositif selon la revendication 1 ou 2, dans lequel le réacteur comprend un lit de boue fluidisée de floculent ou granulaire (6).

4. Dispositif selon l'une quelconque des revendications 1 à 3, dans lequel la densité des buses (18) dans les lignes de distribution (17) est de 1 buse (18) par 4-5 m² d'aire de surface de réacteur, et le diamètre de la buse (18) permet une vitesse de 3-5 m/s du flux d'eaux usées.

5. Dispositif selon l'une quelconque des revendications 1 à 4, dans lequel le niveau minimum d'eaux usées dans le réservoir (12) d'alimentation est à une hauteur comprise entre 0,5 et 1,5 m au-dessus du niveau d'eau à l'intérieur du réacteur, et le niveau maximum d'eaux usées à l'intérieur du réservoir (12) d'alimentation est à une hauteur comprise entre 1,5 et 2,5 m au-dessus de niveau d'eau à l'intérieur du réacteur, le niveau maximum étant plus haut que le niveau minimum d'eaux usées à l'intérieur du réacteur.

6. Procédé d'injection et de mélange d'eaux usées non pressurisé d'entrée dans des réacteurs anaérobiques à haut débit au moyen du dispositif défini selon l'une quelconque des revendications 1 à 5 pour fluidiser le lit de boue (6) avec des eaux usées non stabilisées et sous des températures mésophiles, **caractérisé en ce que** le procédé comprend :
de remplir le réservoir (12) avec un flux (1) d'eaux usées ;
d'ouvrir automatiquement la vanne (16) au moyen du capteur de niveau d'eau (19) qui envoie un signal aux moyens de commande (20) quand le volume effectif à l'intérieur du réservoir (12) atteint le niveau maximum Hₘₐₓ pour générer une impulsion de flux d'eau usées par gravité qui passe à travers le distributeur d'entrée (15) qui relie l'orifice de sortie (14) du réservoir (12) d'alimentation à la ligne de distribution (17), injectant ainsi ladite impulsion d'eaux usées dans le réacteur à lit de boue (6) ;
distribuer l'impulsion d'eaux usées depuis la ligne de distribution (17) vers le fond du lit de boue (6) du réacteur à travers les buses d'injection (18), par gravité ; et
fermer automatiquement la vanne (16) au moyen du capteur de niveau d'eau (19) qui envoie un signal aux moyens de commande (20) quand le volume effectif à l'intérieur du réservoir (12) atteint le niveau minimum Hₘᵢₙ pour couper l'impulsion.

7. Procédé selon la revendication précédente 6, dans lequel la vitesse de l'impulsion d'eaux usées à l'intérieur du réacteur pour étendre le lit de boue (6) atteint un maximum d'entre 6 et 12 m/h.

8. Procédé selon l'une quelconque des revendications 6 ou 7, dans lequel la vanne (16) s'ouvre quand le niveau d'eaux usées maximum Hₘₐₓ est compris entre 1,5m et 2,5m au-dessus du niveau d'eau à l'intérieur du réacteur, et la vanne (16) se ferme quand le niveau d'eaux usées minimum Hₘᵢₙ est compris entre 0,5m et 1,5m au-dessus du niveau d'eau à l'intérieur du réacteur, Hₘₐₓ étant toujours supérieur à Hₘᵢₙ pour produire l'énergie hydraulique de l'impulsion.

9. Procédé selon l'une quelconque des revendications 6 à 8, dans lequel la différence entre le niveau d'eaux usées maximum et le niveau d'eaux usées minimum à l'intérieur du réservoir (12) définit un volume effectif de 1% du volume total du réacteur.

10. Procédé selon l'une quelconque des revendications 6 à 9, dans lequel la vitesse de l'impulsion d'eaux usées à travers le distributeur d'entrée (15) et la ligne de distribution (17) atteint jusqu'à 1-3 m/s, et la vitesse de l'injection d'eau à travers les buses (18) atteint jusqu'à 3-5 m/s.

11. Réacteur à lit de boue anaérobique à flux ascendant (UASB) pour traitement d'eaux d'égout non stabilisées à températures sub-mésophiles **caractérisé en ce qu'**il comprend le dispositif de mélange et d'injection d'eaux usées non pressurisé d'entrée défini selon l'une quelconque des revendications 1 à 5.
